# EUROPÄISCHE PATENTSCHRIFT

(11) **EP 1 870 313 B1**
(45) Veröffentlichungstag und Bekanntmachung des Hinweises auf die Patenterteilung: **27.05.2009**
(21) Anmeldenummer: 07110042.4
(22) Anmeldetag: 12.06.2007
(51) Int. Cl.: B62D 5/00, B62D 5/04

(54) **Überlagerungsgetriebe**
Differential gear
Organe de transmission à superposition

(30) Priorität: 20.06.2006 DE 102006028269
(43) Veröffentlichungstag der Anmeldung: 26.12.2007
(73) Patentinhaber: ZF-Lenksysteme GmbH, 73527 Schwäbisch Gmünd (DE)
(72) Erfinder: Kruttschnitt, Andreas, 89522 Heidenheim (DE); Rupp, Arthur, 73460 Hüttlingen (DE); Hörsch, Jürgen, 74417 Gschwend (DE); Truthmann, Steffen, 73525 Schwäbisch Gmünd (DE); Domhan, Achim, 73529 Schwäbisch Gmünd (DE)

(56) Entgegenhaltungen:
- WO-A-20/05054034
- WO-A-20/05110833
- WO-A-20/06039825

## Beschreibung

Die Erfindung betrifft ein Überlagerungsgetriebe für ein Fahrzeug, insbesondere für eine Servo- oder Hilfskraftlenkung eines Kraftfahrzeugs nach dem Oberbegriff des Anspruchs 1.

Die Funktion eines Überlagerungsgetriebes in einer Lenkung eines Fahrzeugs besteht darin, einen Lenkwinkel unabhängig von einem Fahrer des Fahrzeugs über eine Steuerungs- und/oder Regelungseinrichtung mittels Stellgrößen, die z.B. von einem Fahrdynamiksystem (ESP-Regler) erzeugt werden können, einzustellen. Beispielsweise wird hierzu ein Planetengetriebe, wie es in der DE 101 59 800 A1 oder ein Wellgetriebe (harmonic-drive) verwendet. Die Übersetzung der Servo- oder Hilfskraftlenkung setzt sich aus den Übersetzungen des jeweiligen Lenkgetriebes und des Überlagerungsgetriebes zusammen. Ein Überlagerungsgetriebe weist zu diesem Zweck eine erste Getriebeeingangswelle und eine zweite Getriebeeingangswelle auf und überlagert die an den beiden Getriebeeingangswellen auftretenden Drehwinkel auf eine Getriebeausgangswelle, die mit einem Lenkgetriebe und lenkbaren Rädern des Fahrzeugs wirkverbunden ist. Soll die Übersetzung beispielsweise aus fahrdynamischen Gründen geändert werden, wird im Fall eines Planetenradgetriebes als Überlagerungsgetriebe der Käfig über einen elektrischen Servomotor angetrieben, oder bei einem Wellgetriebe als Überlagerungsgetriebe ein exzentrischer Antriebskern des Wellgetriebes durch einen Servomotor in Drehung versetzt.

Um bei abgeschaltetem Servomotor, etwa bei Ausfall dessen Energieversorgung, eine feste Übersetzung zu realisieren und nicht den an einer Lenkhandhabe durch den Fahrer auf die erste Getriebeeingangswelle eingegebenen Soll-Lenkwinkel durch einen Leerlauf der mit dem Servomotor wirkverbundenen zweiten Getriebeeingangswelle zu kompensieren, ist es zwingend erforderlich, die zweite Getriebeeingangswelle und damit in der Regel eine Motorwelle des Servomotors, am Drehen zu hindern.

Eine Lösung zur Verhinderung des Drehens der zweiten, mit einem Servomotor wirkverbundenen Getriebeeingangswelle eines Überlagerungsgetriebe einer Servolenkung beschreibt die DE 103 34 057 A1, die einen Verriegelungsmechanismus für ein Planetenradgetriebe zeigt. Der Verriegelungsmechanismus ist durch einen scheibenförmigen, an einen Rotor eines Servomotors festgelegten Verriegelungshalter und einen mit diesem zusammenwirkenden, fahrzeugfesten Verriegelungsarm gebildet. Der Verriegelungshalter weist eine Vielzahl von ersten, vertieften Abschnitten, die in einer Umfangsrichtung entlang seines Umfangs ausgebildet sind und einen zweiten, vertieften Abschnitt, der jeweils in die vertieften Abschnitte eingelassen ist, auf. Mit einem Eingriffselement des Verriegelungsarmes kann der Verriegelungsarm in die vertieften Abschnitte eingreifen und sich von diesen entfernen.

Weiterhin ist aus WO 2006039825 A1 eine Verriegelungseinrichtung für ein Überlagerungsgetriebe bekannt.

Der scheibenförmige Verriegelungshalter ist lediglich kraftschlüssig an dem Rotor des Servomotors festgelegt und es ist eine Drehmomentbegrenzung dadurch geschaffen, um Beschädigungen der Bauteile des Verriegelungsmechanismusses zu vermeiden. Dadurch ist aber eine absolut sichere Verriegelung der zweiten Getriebeeingangswelle des Überlagerungsgetriebes verhindert. Zudem kann der Verriegelungsmechanismus insbesondere bei hohen Drehzahlen des Rotors des Servomotors zu Beschädigungen des Servomotors beim Eingriff des Verriegelungsarmes in den Verriegelungshalter hervorrufen.

Der Erfindung liegt die Aufgabe zugrunde, ein Überlagerungsgetriebe zu schaffen, das sicher bei Ausfall eines Servomotors des Überlagerungsgetriebes ist und das langlebig ist.

Die Aufgabe wird mit einem Überlagerungsgetriebe mit den Merkmalen des Anspruchs 1 gelöst.

Dadurch dass eine Verriegelungseinrichtung für ein Überlagerungsgetriebe geschaffen ist, die aus einem Innenring gebildet ist, der drehfest mit der zweiten Getriebeeingangswelle verbunden ist und einen oder mehrere vorzugsweise radiale Vorsprünge trägt, die unter Zwischenlage eines Elements mit elastomeren Eigenschaften in eine oder mehrere Ausnehmungen eines den Innenring radial umschließenden Außenrings eingreifen, wobei der Außenring vorzugsweise an seinem radialen Umfang taschenartige Vertiefungen mit ein oder mehreren Vorsprüngen aufweist, die als Anschläge für ein Sperrelement der Verriegelungseinrichtung dienen, mit denen der Außenring an einem fahrzeugfesten Gehäuse des Überlagerungsgetriebes oder des Servomotors formschlüssig lösbar festgelegt werden kann, ist eine sichere Festlegung der zweiten Getriebeeingangswelle und damit eines Rotors des Servomotors ermöglicht, die in definiertem Bereich eine elastische Nachgiebigkeit und damit einen schonenden Verriegelungsvorgang ermöglicht.

Die erfindungsgemäße Verriegelungseinrichtung für ein Überlagerungsgetriebe ist sicher und gewährleistet eine lange Lebensdauer der Bauteile des Überlagerungsgetriebes.

Bevorzugte Ausführungen ergeben sich aus den Unteransprüchen.

Die taschenförmigen Vertiefungen an der radial äußeren Umfangsfläche des Außenrings sind durch einen Verlauf des Außenradius des Außenrings gekennzeichnet, der eine stetige, vorzugsweise zu dem Vorsprung einer jeden taschenartigen Vertiefung hin streng monoton fallenden Funktion in Abhängigkeit des Winkels im Polarkoordinatensystem aufweist.

Um ein Abbremsen des Außenrings und nicht ein abruptes Verriegeln des Außenrings durch das Sperrelement zu ermöglichen, ist vorgesehen, die taschenartigen Vertiefungen an dem Außenring zu beiden Seiten der Vorsprünge nockenartig, mit einem, durch eine allmähliche Vergrößerung des Außenradius gekennzeichneten Verlauf zu bilden. So kann ein einfallendes Sperrelement auf den nockenartigen Flächen gleitend sich zu den Vorsprüngen, die als Anschläge für das Sperrelement dienen, bewegen und dabei beim Überstreichen der nockenartigen Kontur den Außenring verzögern.

An den Vorsprüngen findet eine vorzugsweise spielfreie Verriegelung unabhängig von der Drehrichtung des Außenringes statt, indem das Sperrelement in eine, durch einen Sprung im Außenradius des Außenringes gebildete Vertiefung an dem Vorsprung eingreift.

Das Sperrelement ist bevorzugt als Verriegelungsstift, der von Elektromagneten einer elektromagnetischen Verriegelungseinrichtung bewegt wird, ausgebildet. Die Verriegelung ist lösbar aber formschlüssig.

Zur Erhöhung der Betriebssicherheit sind zwei oder mehrere Verriegelungseinrichtungen, die auf einen oder zwei oder mehrere Außenringe über ein oder mehrere Sperrelemente verriegelnd wirken können, einsetzbar. Die Sperrelemente können an sich gegenüberliegenden Anschlagsflächen der Anschläge zu liegen kommen und ermöglichen so eine sichere, spielfreie und redundante Verriegelung. Um ein sicheres Sperren auch bei Ausfall oder Fehlfunktion der Bestromung des oder der Elektromagneten sicherzustellen, weist die Verriegelungseinrichtung einen Energiespeicher vorzugsweise in Form ein oder mehrerer mechanischer Schraubendruckfedern auf, die eine Verriegelungskraft auf das Sperrelement in der Lage sind aufzubringen.

Zur Absicherung des durch die Schraubendruckfedern gebildeten Federspeichers gegen Federbruch sind die Federn durch Führungen an ihrem Außenumfang und ihrem Innenumfang so gehalten, dass die Federn nicht kollabieren können und auch bei Federbruch eine Mindestfederkraft auf das Sperrelement aufzubringen in der Lage sind. Die Federsteigung ist so gewählt, dass sich die eventuell gebrochenen Federteile nicht ineinander schrauben können.

Die Verriegelungseinrichtung eignet sich grundsätzlich für verschiedenste Bauarten von Überlagerungsgetrieben mit nicht koaxialer oder koaxialer Anordnung der ersten und zweiten Getriebeeingangswelle. In einem besonders bevorzugten Ausführungsbeispiel ist die zweite Getriebeeingangswelle als Hohlwelle eines vorzugsweise elektrischen Servomotors gebildet und um die erste Getriebeeingangswelle angeordnet. Das Überlagerungsgetriebe ist vorzugsweise als Wellgetriebe, dessen exzentrischer Antriebskern von der zweiten Getriebeeingangswelle und dem Servomotor angetrieben ist, ausgebildet.

In Abhängigkeit von der Bauart des elektrischen Servomotors kann es zweckmäßig sein, den Rotor und die zweite Getriebeeingangswelle des Überlagerungsgetriebes mit Stromsteuerungsmaßnahmen, die einen magnetischen Kurzschluss zwischen Rotor und Stator erzeugen, zu verzögern. Dies kann durch ein auf einen etwaigen Spannungsabfall der Servomotor-Versorgungsspannung ansprechendes Relais erfolgen.

Das eine elastische, formschlüssige Koppelung von Innenring und Außenring ermöglichende Element mit elastomeren Eigenschaften ist bevorzugt als einteiliges, ringförmiges Element gebildet, das von den Vorsprüngen des Innenringes durchragt wird.

Bevorzugt sind drei oder mehrere Vorsprünge mit gleichem tangentialen Abstand zueinander angeordnet, die als Anschlag für radiale Ausnehmungen in dem Außenring dienen. Die Vorsprünge an dem Innenring können verschiedene Gestaltsform aufweisen. So kann es zweckmäßig sein, in tangentialer Anordnung an den Innenring betrachtet, abwechselnd einen gerundeten, höcker- oder nockenförmigen Vorsprung und einen stiftförmigen Vorsprung an den Innenring vorzusehen. Ebenfalls im tangentialen Wechsel können an dem Element mit elastomeren Eigenschaften verschiedene Schichtdicken zur Zwischenlage des Elements zwischen die Vorsprünge an dem Innenring und die Ausnehmungen an dem Außenring vorgesehen sein, wodurch beispielsweise bei Kombination von Zwischenlagen mit größeren Schichtdicken an dem Element mit elastomeren Eigenschaften mit den nockenförmigen Vorsprüngen an dem Innenring und Zwischenlagen mit geringen Schichtdicken an dem Element mit elastomeren Eigenschaften mit stiftförmigen Vorsprüngen an dem Innenring ein gestuftes Verzögern der zweiten Getriebeeingangswelle und eines Rotors des Servomotors vor der Verriegelung ermöglicht ist. In gleicher Weise ist es zweckmäßig mehrere taschenförmige Vertiefungen mit gleicher tangentialer Erstreckung an dem Außenring anzuordnen, wodurch mehrere Verriegelungspositionen je Umdrehung der zweiten Getriebeeingangswelle ermöglicht sind. Das Element mit elastomeren Eigenschaften und die tangentiale Erstreckung der Ausnehmungen, in die die Vorsprünge in den Außenring eingreifen, ermöglichen in einem besonders bevorzugten Ausführungsbeispiel des Überlagerungsgetriebes, dass sich der Innenring relativ zu dem Außenring um etwa 30° verdrehen kann, was einen Bauteil-schonenden Verriegelungsvorgang der zweiten Getriebeeingangswelle ermöglicht.

Um Torsionsspannungen in der zweiten Getriebeeingangswelle beim Verzögern und Verriegeln zu minimieren, ist es zweckmäßig, die Verriegelungseinrichtung in axialer Richtung des Überlagerungsgetriebes zwischen dem elektrischen Servomotor und dem exzentrischen Antriebskern eines Wellgetriebes anzuordnen.

Die Erfindung wird nun näher anhand eines Ausführungsbeispiels beschrieben und anhand der beiliegenden Zeichnung wiedergegeben.
- Fig. 1: zeigt einen Längsschnitt durch ein Überlagerungsgetriebe mit Lenkwelle einer elektrischen Servolenkung,
- Fig. 2: zeigt einen vergrößerten Längsschnitt durch das Überlagerungsgetriebe in Fig. 1,
- Fig. 3: zeigt einen Querschnitt durch das Überlagerungsgetriebe in Fig. 2 entlang der Linie **II** - **II.**

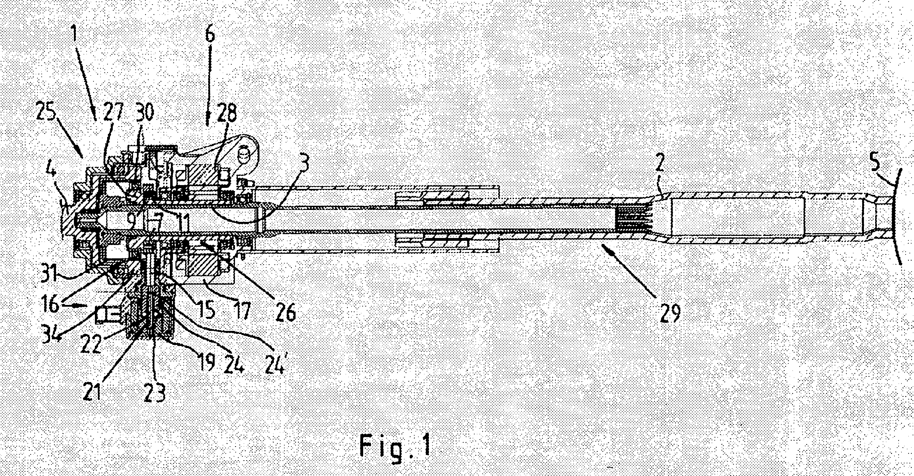

In Fig. 1 ist in einem Längsschnitt eine als Active Steering ausgebildete Servolenkung für einen Personenkraftwagen teilweise gezeigt.

Die Servolenkung ist als elektrische Überlagerungslenkung aus einem als elektrischen Hohlwellen-Servomotor 28 gebildeten Servomotor 6, der sich an einem fahrzeugfesten Bauteil abstützt, einer Lenkwelle 29, die drehfest mit einer Lenkhandhabe 5 verbunden ist, aus einem Überlagerungsgetriebe 1, das als Wellgetriebe 25 gebildet ist, und aus einer Getriebeausgangswelle 4 für ein nicht gezeigtes Lenkgetriebe gebildet.

Das Lenkgetriebe kann Teil einer elektrischen oder hydraulischen Hilfskraftlenkung sein. Das Wellgetriebe 25 dient zur Überlagerung eines auf eine erste Getriebeeingangswelle 2 aufgebrachten Lenkwinkels mit einem, von dem Servomotor 6 auf eine zweite Getriebeeingangswelle 3 aufgebrachten Drehwinkel. Die erste Getriebeeingangswelle 2 wird von der Lenkwelle 29 gebildet, während die zweite Getriebeeingangswelle 3 durch eine Hohlwelle 26, auf der Rotormagnete des Servomotors 6 festgelegt sind, gebildet ist. Die Hohlwelle 26 umschließt die erste Getriebeeingangswelle 2 und ist an Wälzlager, die sich an einem gemeinsamen Gehäuse 17 des Servomotors 6 und des Wellgetriebes 25 abstützen, gelagert. Die Hohlwelle 26 ist einstückig mit einem exzentrischen, vorzugsweise ellipsenförmigen Antriebskern 27 gebildet.

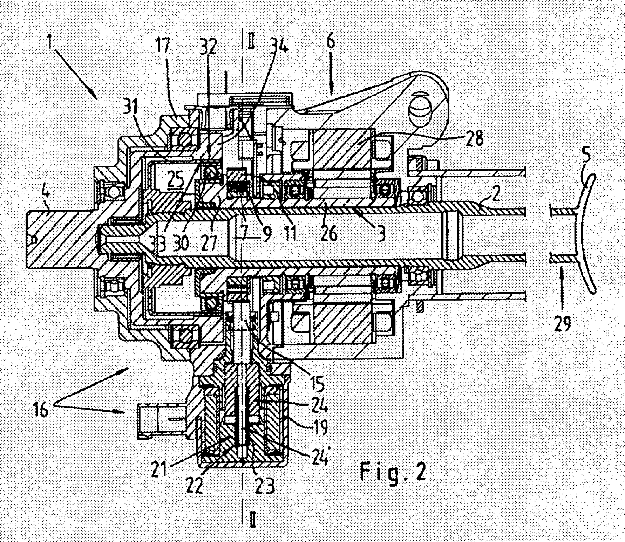

Fig. 2 verdeutlicht die Funktion des Überlagerungsgetriebes 1 in einem Längsschnitt. Um den ellipsenförmigen Umfang des exzentrischen Antriebskerns 27 ist ein flexibles Kugellager 30 aufgezogen. Der exzentrische Antriebskern 27 greift mit seiner axialen Erstreckung in eine aus elastischem Stahlblech gebildete, topfförmige, radialflexible Abrollbuchse 31 (flex-spline) ein. Die radialflexible Abrollbuchse 31 weist eine Außenmantelfläche 32 auf, die im axialen Bereich des Kugellagers 30 eine Außenverzahnung trägt. Diese Außenverzahnung greift unter Wirkung der ellipsenförmigen Aufweitung der radialflexiblen Abrollbuchse 31 mit zwei Umfangsabschnitten in eine Innenverzahnung an einer zylindrischen Stützfläche 33 eines drehfest mit der Getriebeausgangswelle 4 des Wellgetriebes 25 verbundenen Stützringes 34 (circularspline) ein. Der Stützring 34, die Getriebeausgangswelle 4 und die Getriebeeingangswellen 2, 3 sind konzentrisch angeordnet. Die mit der Lenkhandhabe 5 wirkverbundene erste Getriebeeingangswelle 2 ist drehfest mit der radialflexiblen Abrollbuchse 31 verbunden. Bei Rotation des exzentrischen Antriebskerns 27 erfolgt die ellipsenförmige Aufweitung in fortlaufendem Wechsel entlang der Innenverzahnung an der zylindrischen Stützfläche 33. Der innenverzahnte Stützring 34 weist eine größere Zähnezahl als die radialflexible Abrollbuchse 31 auf, wodurch eine Verdrehung des Stützrings 34 und damit der Getriebeausgangswelle 4 relativ zu der ersten Getriebeeingangswelle 2 pro Umdrehung des exzentrischen Antriebskernes 27 um die Differenz der Zähnezahl erfolgt. Somit ist durch den Servomotor 6 eine Winkelüberlagerung, die insbesondere von Fahrt- und Fahrzeugparametern abhängig sein kann, durchgeführt worden.

Um bei einer Fehlfunktion oder bei einem Ausfall des Servomotors 6 zu verhindern, dass die den Rotor des elektrischen Servomotors 28 bildende Hohlwelle 26 dreht und somit eine Übertragung eines Drehwinkels der ersten Getriebeeingangswelle 2 und der Lenkhandhabe 5 über die radialflexible Abrollbuchse 31 auf den Stützring 34 und die Getriebeausgangswelle 4 gänzlich unmöglich gemacht und das Fahrzeug nicht steuerbar ist, ist eine elektromagnetische Verriegelungseinrichtung 19, wie sie die Figuren 1 bis 3 zeigen, zur formschlüssigen Festlegung der zweiten Getriebeeingangswelle 3 an das Gehäuse 17 vorgesehen.

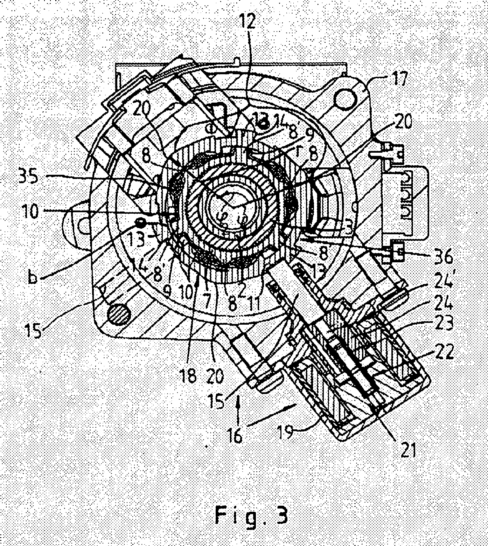

Wie insbesondere die Figuren 2 und 3 zeigen, ist die elektromagnetische Verriegelungseinrichtung 19 aus einem Innenring 7 gebildet, der mit Hilfe einer Kerbzahnwellenverbindung auf der zweiten Getriebeeingangswelle 3 oder Hohlwelle 26 festgelegt ist. Der Innenring 7 weist mit 120° Versatz zueinander im Wechsel je 3 stiftförmige Vorsprünge 8' und je 3 höckerförmige Vorsprünge 8 auf, die in insgesamt 6 Ausnehmungen 10 eines Außenringes 11, der den Innenring 7 radial umgibt, eingreifen.

Die stiftförmigen Vorsprünge 8' weisen streng radial verlaufende Anschlagsflächen auf und liegen mit ihrer Umfangsfläche an den Ausnehmungen 10 gleitend an, wodurch der Außenring 11 zentriert ist. Die für die stiftförmigen Vorsprünge 8' vorgesehenen Ausnehmungen 10 haben streng radial und axial verlaufende Anschlagsflächen für die stiftförmigen Vorsprünge 8'. Die höcker- oder nockenförmigen Vorsprünge 8 kommen in Ausnehmungen zu liegen, die tangential breiter sind als die Ausnehmungen 10 für die stiftförmigen Vorsprünge 8' und haben radiales Spiel in den Ausnehmungen 10.

Ein Element mit elastomeren Eigenschaften umgibt ringförmig den Innenring 7 und die Anschlagflächen der stiftförmigen und höckerförmigen Vorsprünge 8, 8', wobei die höckerförmigen Vorsprünge 8 zudem radial von dem Element 9 mit elastomeren Eigenschaften umgeben sind. Um die höckerförmigen Vorsprünge 8 ist das Element 9 zu beiden Seiten der Vorsprünge 8 mit Wulste 35 versehen, die eine vielfache Dicke wie die Bereiche des Elements 9 an dem stiftförmigen Vorsprüngen 8' aufweisen.

Der Außenring 11 weist in dem in den Figuren 1 bis 3 gezeigten Ausführungsbeispiel in seiner radial äußeren Umfangsfläche 18 drei taschenartige Vertiefungen 12 mit einer tangentialen Erstreckung b auf, wobei ihre jeweiligen tangentialen Ränder 20 nockenartig mit flacher Steigung ausgebildet sind. Der Radius r des Außenringes 11 vergrößert sich zu den Rändern 20 hin allmählich, bzw. nimmt zur Mitte der taschenartigen Vertiefungen 12 ab. Der Radiusverlauf ist somit von einer stetigen Funktion in Abhängigkeit eines Winkels ϕ in einem vorgegebenen Winkelabschnitt ϕ₁- ϕ₂ im Polarkoordinatensystem abhängig. In der Mitte jeder taschenförmigen Vertiefung ist ein Vorsprung 13, der als Anschlag 14 für ein Sperrelement 15 der elektromagnetischen Verriegelungseinrichtung 19 dient, radial hervorragend. Zu beiden Seiten eines jeden Vorsprungs 13 weist der Radius r in tangentialer Richtung des Außenrings 11 einen gleichbleibenden Wert auf um dann einen positiven Sprung aufzuweisen. Dadurch ist eine Vertiefung 36 geschaffen, in die die Spitze des Sperrelements 15 spielfrei einfallen kann und den Außenring 11 sicher an dem Gehäuse 17 formschlüssig festlegen kann. Wird das als Stift mit einem Anker einer elektromagnetischen Spule gebildete Sperrelement 15 radial auf dem Außenring 11 bewegt, so kann das Sperrelement 15 zu beiden Seiten der Vorsprünge 13 in Abhängigkeit von der Drehrichtung des elektrischen Servomotors 28 auf den nockenartigen Flächen am Rand 20 der taschenartigen Vertiefung 12 gleiten und den Außenring 11 verzögern, in die Vertiefungen 36 fallen und an dem Vorsprung 13 verriegeln. Der Innenring 7 kann sich dabei unter elastischer Verformung der Wülste 35 des Elements 9 mit elastomeren Eigenschaften relativ zu dem Außenring 11 verdrehen, wodurch ein den Rotor des elektrischen Servomotors 28 schonendes Abbremsen ermöglicht ist. Wie in Fig. 3 in gestrichelter Form gezeigt ist, können zwei oder mehrere Sperrelemente 15 an sich gegenüberliegenden Anschlagsflächen verschiedener Anschläge 14 zur Anlage kommen, wodurch eine redundante, spielfreie Verriegelung ermöglicht ist.

Ein Energiespeicher 21, der als mechanische Feder 22 und in dem gezeigten Ausführungsbeispiel als Schraubendruckfeder 23 gebildet ist, dient zur automatischen Verriegelung bei Ausfall der elektromagnetischen Verriegelungseinrichtung 19. Die Schraubendruckfeder 23 ist in einer zylindrischen Führung 24 außen und mit einem Führungsstift als innere Führung 24' so in dem Spulen- und Ankerbereich der Verriegelungseinrichtung 19 gehalten, dass selbst bei einem Federbruch die Betriebssicherheit des Überlagerungsgetriebes 1 gesichert ist.

## Patentansprüche

1. Überlagerungsgetriebe für ein Fahrzeug, insbesondere für eine Servo- oder Hilfskraftlenkung eines Kraftfahrzeugs, mit einer ersten Getriebeeingangswelle (2) und einer zweiten Getriebeeingangswelle (3) zur Überlagerung der an den beiden Getriebeeingangswellen (2,3) auftretenden Drehwinkeln auf eine Getriebeausgangswelle (4) des Überlagerungsgetriebes (1), wobei die erste Getriebeeingangswelle (2) mit einer Lenkhandhabe (5) wirkverbunden ist und die zweite Getriebeeingangswelle (3) mit einem Servomotor (6) wirkverbunden ist, wobei die zweite Getriebeeingangswelle (3) einen Bund aufweist oder mit einem Innenring (7) drehfest verbunden ist, der einen oder mehrere radiale und/oder axiale Vorsprünge (8) trägt, **dadurch gekennzeichnet, dass** die Vorsprünge (8) unter Zwischenlage eines Elements (9) mit elastomeren Eigenschaften in eine oder mehrere Ausnehmungen (10) eines Außenrings (11) einen Formschluß ermöglichend eingreifen und der Außenring (11) an seinem radialen und/oder axialen Umfang taschenartige Vertiefungen (12) mit ein oder mehreren Vorsprüngen (13) aufweist, die als Anschläge (14) für ein Sperrelement (15) einer Verriegelungseinrichtung (16) dienen, mit denen der Außenring (11) an einem fahrzeugfesten Gehäuse (17) des Überlagerungsgetriebes (1) oder des Servomotors (6) formschlüssig lösbar festlegbar ist.

2. Überlagerungsgetriebe nach Anspruch 1, **dadurch gekennzeichnet, dass** die taschenartigen Vertiefungen (12) an dem Außenring (11) in seiner radial äußeren Umfangfläche (18) angeordnet sind und sein Radius-Verlauf an der Kontur der taschenartigen Vertiefungen (12) eine stetige Funktion in Abhängigkeit eines Winkels (ϕ) im Polarkoordinatensystem in einem vorgegebenen Winkelabschnitt (ϕ₁ - (ϕ₂) bildet.

3. Überlagerungsgetriebe nach Anspruch 2, **dadurch gekennzeichnet, dass** der Konturverlauf der taschenartigen Vertiefungen (12) an dem Außenring (11) zu beiden Seiten der Vorsprünge (13) nockenartig durch einen allmählich sich vergrößernden Radius (r) gebildet ist.

4. Überlagerungsgetriebe nach Anspruch 3, **dadurch gekennzeichnet, dass** der Konturverlauf der taschenartigen Vertiefungen (12) an dem Außenring (11) zu beiden Seiten der Vorsprünge (13) einen positiven Sprung des Radius (r) aufweist.

5. Überlagerungsgetriebe nach einem der Ansprüche 1 bis 4, **dadurch gekennzeichnet, dass** die Vorsprünge (13) in den taschenartigen Vertiefungen (12) des Außenrings (11) zur formschlüssigen Anlage eines Sperrelements (15) einer elektromagnetischen Verriegelungseinrichtung (19) dient.

6. Überlagerungsgetriebe nach einem der Ansprüche 3 bis 5, **dadurch gekennzeichnet, dass** die Randbereiche (20) der taschenartigen Vertiefungen (12) nockenartig, durch einen allmählich sich vergrößernden Radius (r) des Außenrings (11) gebildet sind.

7. Überlagerungsgetriebe nach einem der Ansprüche 1 bis 6, **dadurch gekennzeichnet, dass** zumindest 2 Verriegelungseinrichtungen (16) auf ein oder mehrere Außenringe (11) an der zweiten Getriebeeingangswelle (3) mit ein oder mehreren Sperrelementen (15) wirken.

8. Überlagerungsgetriebe nach Anspruch 7, **dadurch gekennzeichnet, dass** die Sperrelemente (15) an gegenüberliegenden Anschlagsflächen der Anschläge (14) so anliegen, dass der Aussenring (11) in jeder Drehrichtung gesperrt ist.

9. Überlagerungsgetriebe nach einem der Ansprüche 1 bis 8, **dadurch gekennzeichnet, dass** die Verriegelungseinrichtung (16) einen Energiespeicher (21) aufweist, der ein automatisches Verriegeln des Außenrings (11) gegenüber dem Gehäuse (17) des Überlagerungsgetriebes (1) oder eines anderen fahrzeugfesten Bauteils bei einer Fehlfunktion des Servomotors (6) ermöglicht.

10. Überlagerungsgetriebe nach Anspruch 9, **dadurch gekennzeichnet, dass** der Energiespeicher (21) durch eine oder mehrere mechanische Federn (22) gebildet ist.

11. Überlagerungsgetriebe nach Anspruch 10, **dadurch gekennzeichnet, dass** die Feder (22) in Führungen (24, 24') so gehalten ist, dass bei einem Federbruch eine Mindestfederkraft zum automatischen Verriegeln des Außenrings (11) mit dem Gehäuse (17) des Überlagerungsgetriebes (1) oder dem fahrzeugfesten Bauteil verbleibt.

12. Überlagerungsgetriebe nach Anspruch 10 oder 11, **dadurch gekennzeichnet, dass** die Feder (22) eine Schraubendruckfeder (23) ist, die an ihrem Innenumfang und an ihrem Außenumfang gleitend an zylinderförmigen Führungen (24, 24') anliegt.

13. Überlagerungsgetriebe nach einem der Ansprüche 1 bis 12, **dadurch gekennzeichnet, dass** die erste Getriebeeingangswelle (2) und die zweite Getriebeeingangswelle (3) koaxial zueinander angeordnet sind.

14. Überlagerungsgetriebe nach einem der Ansprüche 1 bis 13, **dadurch gekennzeichnet, dass** das Überlagerungsgetriebe (1) ein Wellgetriebe (25) ist und die zweite Getriebeeingangswelle (3) eine Hohlwelle (26) des Servomotors (6) ist, die einen exzentrischen Antriebskern (27) trägt.

15. Überlagerungsgetriebe nach Anspruch 14, **dadurch gekennzeichnet, dass** der Servomotor (6) ein elektrischer Servomotor (28) ist.

16. Überlagerungsgetriebe nach Anspruch 15, **dadurch gekennzeichnet, dass** der elektrische Servomotor (28) über magnetischen Kurzschluss abbremsbar ist.

17. Überlagerungsgetriebe nach Anspruch 16, **dadurch gekennzeichnet, dass** der magnetische Kurzschluss durch ein Relais bei Abfall der Versorgungsspannung für den elektrischen Servomotor (28) ausgelöst ist.

18. Überlagerungsgetriebe nach einem der Ansprüche 1 bis 17, **dadurch gekennzeichnet, dass** das Element (9) mit elastomeren Eigenschaften ein einteiliges, ringförmiges Element ist, durch das die Vorsprünge (8, 8') des Innenrings (7) durchragen.

19. Übertragungsgetriebe nach einem der Ansprüche 1 bis 18, **dadurch gekennzeichnet, dass** die Vorsprünge (8, 8') an dem Innenring (7) in gleichem tangentialen Abstand zueinander angeordnet sind.

20. Überlagerungsgetriebe nach einem der Ansprüche 1 bis 19, **dadurch gekennzeichnet, dass** die Vorsprünge (8, 8') an dem Innenring (7) verschiedene Gestaltsform aufweisen.

21. Überlagerungsgetriebe nach einem der Ansprüche 1 bis 20, **dadurch gekennzeichnet, dass** das Element (9) mit elastomeren Eigenschaften verschiedene Schichtdicken an den Vorsprüngen (8, 8') des Innenrings (7) aufweist.

22. Überlagerungsgetriebe nach einem der Ansprüche 1 bis 21, **dadurch gekennzeichnet, dass** die taschenförmigen Vertiefungen (12) an dem Außenring (11) gleiche tangentiale Erstreckung (b) aufweisen.

23. Überlagerungsgetriebe nach einem der Ansprüche 1 bis 22, **dadurch gekennzeichnet, dass** der Innenring (7) relativ zu dem Außenring (11) um etwa 30° verdrehbar ist.

24. Überlagerungsgetriebe nach einem der Ansprüche 15 bis 23, **dadurch gekennzeichnet, dass** die Verriegelungseinrichtung (19) in axialer Richtung des Überlagerungsgetriebes (1) zwischen dem elektrischen Servomotor (28) und dem exzentrischen Antriebskern (27) des Wellgetriebes (25) angeordnet ist.

## Claims

1. Variable-ratio gear unit for a vehicle, in particular for a power steering system or a power assistance system of a motor vehicle, having a first gear-unit input shaft (2) and a second gear-unit input shaft (3) for superimposing the rotational angles which occur on both gear-unit input shafts (2, 3) onto a gear-unit output shaft (4) of the variable-ratio gear unit (1), the first gear-unit input shaft (2) being operatively connected to a steering handle (5) and the second gear-unit input shaft (3) being operatively connected to a servomotor (6), the second gear-unit input shaft (3) having a collar or being connected fixedly in terms of rotation to an inner ring (7) which carries one or more radial and/or axial projections (8), **characterized in that** the projections (8), with the interposition of an element (9) having elastomeric properties, engage into one or more recesses (10) of an outer ring (11) in a manner which makes a positive connection possible, and the outer ring (11) has pocket-like depressions (12) with one or more projections (13) on its radial and/or axial circumference which serve as stops (14) for a locking element (15) of a latching device (16), by way of which stops (14) the outer ring (11) can be fixed in a positive and releasable manner to a housing (17) of the variable-ratio gear unit (1) or of the servomotor (6), which housing (17) is fixed to the vehicle.

2. Variable-ratio gear unit according to Claim 1, **characterized in that** the pocket-like depressions (12) are arranged on the outer ring (11) in its radially outer circumferential face (18) and its radius profile forms a constant function on the contour of the pocket-like depressions (12) as a function of an angle (ϕ) in the polar coordinate system in a predefined angular section (ϕ₁ - ϕ₂) .

3. Variable-ratio gear unit according to Claim 2, **characterized in that** the contour profile of the pocket-like depressions (12) is formed on the outer ring (11) on both sides of the projections (13) in a cam-like manner by a gradually increasing radius (r).

4. Variable-ratio gear unit according to Claim 3, **characterized in that** the contour profile of the pocket-like depressions (12) has a positive leap of the radius (r) on the outer ring (11) on both sides of the projections (13).

5. Variable-ratio gear unit according to one of Claims 1 to 4, **characterized in that** the projections (13) in the pocket-like depressions (12) of the outer ring (11) serve for the positive contact of a locking element (15) of an electromagnetic latching device (19).

6. Variable-ratio gear unit according to one of Claims 3 to 5, **characterized in that** the edge regions (20) of the pocket-like depressions (12) are formed in the manner of a cam by a gradually increasing radius (r) of the outer ring (11).

7. Variable-ratio gear unit according to one of Claims 1 to 6, **characterized in that** at least two latching devices (16) act on one or more outer rings (11) on the second gear-unit input shaft (3) by way of one or more locking elements (15).

8. Variable-ratio gear unit according to Claim 7, **characterized in that** the locking elements (15) bear against opposite stop faces of the stops (14) in such a way that the outer ring (11) is locked in every rotational direction.

9. Variable-ratio gear unit according to one of Claims 1 to 8, **characterized in that** the latching device (16) has an energy accumulator (21) which makes automatic latching of the outer ring (11) possible with respect to the housing (17) of the variable-ratio gear unit (1) or of another component which is fixed to the vehicle, in the case of a malfunction of the servomotor (6).

10. Variable-ratio gear unit according to Claim 9, **characterized in that** the energy accumulator (21) is formed by one or more mechanical springs (22).

11. Variable-ratio gear unit according to Claim 10, **characterized in that** the spring (22) is held in guides (24, 24') in such a way that, if a spring breaks, a minimum spring force remains for automatically latching the outer ring (11) to the housing (17) of the variable-ratio gear unit (1) or to the component which is fixed to the vehicle.

12. Variable-ratio gear unit according to Claim 10 or 11, **characterized in that** the spring (22) is a helical compression spring (23) which bears against cylindrical guides (24, 24') such that it glides on its inner circumference and on its outer circumference.

13. Variable-ratio gear unit according to one of Claims 1 to 12, **characterized in that** the first gear-unit input shaft (2) and the second gear-unit input shaft (3) are arranged coaxially with respect to one another.

14. Variable-ratio gear unit according to one of Claims 1 to 13, **characterized in that** the variable-ratio gear unit (1) is a harmonic drive (25) and the second gear-unit input shaft (3) is a hollow shaft (26) of the servomotor (6), which hollow shaft (26) carries an eccentric drive core (27).

15. Variable-ratio gear unit according to Claim 14, **characterized in that** the servomotor (6) is an electric servomotor (28).

16. Variable-ratio gear unit according to Claim 15, **characterized in that** the electric servomotor (28) can be braked via magnetic short circuit.

17. Variable-ratio gear unit according to Claim 16, **characterized in that** the magnetic short circuit is triggered by a relay when the supply voltage for the electric servomotor (28) drops.

18. Variable-ratio gear unit according to one of Claims 1 to 17, **characterized in that** the element (9) having elastomeric properties is an integral, annular element, through which the projections (8, 8') of the inner ring (7) protrude.

19. Variable-ratio gear unit according to one of Claims 1 to 18, **characterized in that** the projections (8, 8') are arranged on the inner ring (7) at an identical tangential spacing from one another.

20. Variable-ratio gear unit according to one of Claims 1 to 19, **characterized in that** the projections (8, 8') on the inner ring (7) have a different design shape.

21. Variable-ratio gear unit according to one of Claims 1 to 20, **characterized in that** the element (9) having elastomeric properties has different layer thicknesses at the projections (8, 8') of the inner ring (7).

22. Variable-ratio gear unit according to one of Claims 1 to 21, **characterized in that** the pocket-shaped depressions (12) on the outer ring (11) have the same tangential extent (b).

23. Variable-ratio gear unit according to one of Claims 1 to 22, **characterized in that** the inner ring (7) can be rotated by approximately 30° relative to the outer ring (11).

24. Variable-ratio gear unit according to one of Claims 15 to 23, **characterized in that** the latching device (19) is arranged in the axial direction of the variable-ratio gear unit (1) between the electric servomotor (28) and the eccentric drive core (27) of the harmonic drive (25).

## Revendications

1. Organe de transmission à superposition pour un véhicule, notamment pour une servo-direction ou une direction assistée d'un véhicule automobile, comprenant un premier arbre d'entrée de boîte de vitesses (2) et un deuxième arbre d'entrée de boîte de vitesses (3) pour superposer les angles de rotation survenant au niveau des deux arbres d'entrée de boîte de vitesses (2, 3) à un arbre de sortie de boîte de vitesses (4) de l'organe de transmission à superposition (1), le premier arbre d'entrée de boîte de vitesses (2) étant en liaison fonctionnelle avec un système de direction (5) et le deuxième arbre d'entrée de boîte de vitesses (3) étant en liaison fonctionnelle avec un servomoteur (6), le deuxième arbre d'entrée de boîte de vitesses (3) présentant un épaulement ou étant connecté de manière solidaire en rotation à une bague interne (7), qui porte une ou plusieurs saillies (8) radiales et/ou axiales, **caractérisé en ce que** les saillies (8) viennent en prise dans un ou plusieurs évidements (10) d'une bague externe (11) en permettant un engagement par correspondance géométrique, en interposant un élément (9) ayant des propriétés élastomères, et la bague externe (11) présentant sur sa périphérie radiale et/ou axiale des renfoncements (12) en forme de poche avec une ou plusieurs saillies (13) qui servent de butées (14) pour un élément de blocage (15) d'un dispositif de verrouillage (16), lesquelles permettent de fixer de manière amovible et par engagement par correspondance géométrique la bague externe (11) sur un boîtier (17) fixé au véhicule de l'organe de transmission à superposition (1) ou du servomoteur (6).

2. Organe de transmission à superposition selon la revendication 1, **caractérisé en ce que** les renfoncements (12) en forme de poche sur la bague externe (11) sont disposés dans sa surface périphérique (18) radialement extérieure et l'allure de son rayon au niveau du contour des renfoncements (12) en forme de poche représente une fonction constante dépendant d'un angle (ϕ) dans le système de coordonnées polaires dans une portion angulaire prédéfinie (ϕ₁ - ϕ₂).

3. Organe de transmission à superposition selon la revendication 2, **caractérisé en ce que** l'allure du contour des renfoncements en forme de poche (12) sur la bague extérieure (11) des deux côtés des saillies (13) est réalisée en forme de came par un rayon (r) augmentant progressivement.

4. Organe de transmission à superposition selon la revendication 3, **caractérisé en ce que** l'allure du contour des renfoncements en forme de poche (12) sur la bague extérieure (11) des deux côtés des saillies (13) présente un saut positif du rayon (r).

5. Organe de transmission à superposition selon l'une quelconque des revendications 1 à 4, **caractérisé en ce que** les saillies (13) dans les renfoncements en forme de poche (12) de la bague extérieure (11) servent à l'appui par engagement par correspondance géométrique d'un élément de blocage (15) d'un dispositif de verrouillage électromagnétique (19).

6. Organe de transmission à superposition selon l'une quelconque des revendications 3 à 5, **caractérisé en ce que** les régions de bord (20) des renfoncements en forme de poche (12) sont formées en forme de came, par un rayon (r) augmentant progressivement de la bague externe (11).

7. Organe de transmission à superposition selon l'une quelconque des revendications 1 à 6, **caractérisé en ce qu'**au moins 2 dispositifs de verrouillage (16) agissent sur une ou plusieurs bagues externes (11) sur le deuxième arbre d'entraînement de boîte de vitesses (3) avec un ou plusieurs éléments de blocage (15).

8. Organe de transmission à superposition selon la revendication 7, **caractérisé en ce que** les éléments de blocage (15) s'appliquent contre des surfaces de butée opposées des butées (14) de telle sorte que la bague extérieure (11) soit bloquée dans chaque sens de rotation.

9. Organe de transmission à superposition selon l'une quelconque des revendications 1 à 8, **caractérisé en ce que** le dispositif de verrouillage (16) présente un accumulateur d'énergie (21) qui permet un verrouillage automatique de la bague externe (11) par rapport au boîtier (17) de l'organe de transmission à superposition (1) ou d'un autre composant fixé au véhicule, en cas de mauvais fonctionnement du servomoteur (6).

10. Organe de transmission à superposition selon la revendication 9, **caractérisé en ce que** l'accumulateur d'énergie (21) est formé par un ou plusieurs ressorts mécaniques (22).

11. Organe de transmission à superposition selon la revendication 10, **caractérisé en ce que** le ressort (22) est maintenu dans des guides (24, 24') de telle sorte qu'en cas de rupture du ressort, il subsiste une force de ressort minimale pour le verrouillage automatique de la bague externe (11) au boîtier (17) de l'organe de transmission à superposition (1) ou au composant fixé au véhicule.

12. Organe de transmission à superposition selon la revendication 10 ou 11, **caractérisé en ce que** le ressort (22) est un ressort de pression à boudin (23) qui s'applique sur sa périphérie interne et sur la périphérie externe en glissant sur des guides cylindriques (24, 24').

13. Organe de transmission à superposition selon l'une quelconque des revendications 1 à 12, **caractérisé en ce que** le premier arbre d'entrée de boîte de vitesses (2) et le deuxième arbre d'entrée de boîte de vitesses (3) sont disposés coaxialement l'un à l'autre.

14. Organe de transmission à superposition selon l'une quelconque des revendications 1 à 13, **caractérisé en ce que** l'organe de transmission à superposition (1) est une transmission harmonique (25) et le deuxième arbre d'entrée de boîte de vitesses (3) est un arbre creux (26) du servomoteur (6), qui porte un noyau d'entraînement excentrique (27).

15. Organe de transmission à superposition selon la revendication 14, **caractérisé en ce que** le servomoteur (6) est un servomoteur électrique (28).

16. Organe de transmission à superposition selon la revendication 15, **caractérisé en ce que** le servomoteur électrique (28) peut être freiné par le biais de courts-circuits magnétiques.

17. Organe de transmission à superposition selon la revendication 16, **caractérisé en ce que** le court-circuit magnétique est déclenché par un relais en cas de chute de la tension d'alimentation pour le servomoteur électrique (28).

18. Organe de transmission à superposition selon l'une quelconque des revendications 1 à 17, **caractérisé en ce que** l'élément (9) avec des propriétés élastomères est un élément d'une seule pièce de forme annulaire à travers lequel passent les saillies (8, 8') de la bague interne (7).

19. Organe de transmission à superposition selon l'une quelconque des revendications 1 à 18, **caractérisé en ce que** les saillies (8, 8') sont disposées sur la bague interne (7) à intervalles tangentiels identiques.

20. Organe de transmission à superposition selon l'une quelconque des revendications 1 à 19, **caractérisé en ce que** les saillies (8, 8') présentent différentes formes sur la bague interne (7).

21. Organe de transmission à superposition selon l'une quelconque des revendications 1 à 20, **caractérisé en ce que** l'élément (9) avec des propriétés élastomères présente différentes épaisseurs de couches sur les saillies (8, 8') de la bague interne (7).

22. Organe de transmission à superposition selon l'une quelconque des revendications 1 à 21, **caractérisé en ce que** les renfoncements en forme de poche (12) présentent sur la bague externe (11) une étendue tangentielle identique (b).

23. Organe de transmission à superposition selon l'une quelconque des revendications 1 à 22, **caractérisé en ce que** la bague interne (7) peut tourner d'environ 30° par rapport à la bague externe (11).

24. Organe de transmission à superposition selon l'une quelconque des revendications 15 à 23, **caractérisé en ce que** le dispositif de verrouillage (19) est disposé dans la direction axiale de l'organe de transmission à superposition (1) entre le servomoteur électrique (28) et le noyau d'entraînement excentrique (27) de la transmission harmonique (25).
